# EUROPÄISCHE PATENTSCHRIFT

(11) **EP 1 654 832 B1**
(45) Veröffentlichungstag und Bekanntmachung des Hinweises auf die Patenterteilung: **01.06.2016**
(21) Anmeldenummer: 04738854.1
(22) Anmeldetag: 03.07.2004
(51) Int. Cl.: H04L 12/16, H04B 3/54, H04J 3/06, H04L 7/06, H04L 12/403

(54) **VERFAHREN ZUM BESTIMMEN EINES TEILNEHMERS EINES DATENNETZWERKES ALS PILOTMASTER**
METHOD FOR ESTABLISHING A DEVICE OF A DATA NETWORK AS PILOT MASTER
PROCEDE POUR ETABLIR UN DISPOSITIF D'UN RESEAU DE DONNEES COMME MAITRE PILOTE

(30) Priorität: 07.08.2003 DE 10336946
(43) Veröffentlichungstag der Anmeldung: 10.05.2006
(73) Patentinhaber: ROBERT BOSCH GMBH, 70442 Stuttgart (DE)
(72) Erfinder: ENDERS, Thorsten, 75428 Illingen (DE); BURO, Davide, 72760 Reutlingen (DE)
(86) Internationale Anmeldenummer: PCT/DE2004/001424
(87) Internationale Veröffentlichungsnummer: WO 2005/015832

(56) Entgegenhaltungen:
- DE-A- 10 142 408
- LEEN G ET AL: "TTCAN: a new time-triggered controller area network" MICROPROCESSORS AND MICROSYSTEMS, IPC BUSINESS PRESS LTD. LONDON, GB, Bd. 26, Nr. 2, 17. März 2002 (2002-03-17), Seiten 77-94, XP004339936 ISSN: 0141-9331

## Beschreibung

Die Erfindung betrifft ein Verfahren zum Bestimmen eines Teilnehmers, insbesondere eines Transceivers, aus einer Vielzahl von Teilnehmern eines Datennetzwerkes als Pilotmaster zum Aussenden eines Pilottons, auf wen sich die anderen Teilnehmer des Datennetzwerkes synchronisieren können.

Neben diesem Verfahren betrifft die Erfindung ein Computerprogramm zum Durchführen dieses Verfahrens, einen Datenträger mit diesem Computerprogramm sowie ein Datennetzwerk, auf dem dieses Verfahren durchgeführt werden kann.

### Stand der Technik

Im Stand der Technik sind Bussysteme bekannt, bei denen ein vorher bestimmter Teilnehmer des Bussystems oder ein separater Pilottongenerator vorgesehen ist, um einen Pilotton zu erzeugen, auf den sich die anderen Teilnehmer des Bussystems dann synchronisieren können. Dieser bekannten Vorgehensweise beziehungsweise diesem bekannten Bussystem haftet jedoch der Nachteil an, dass bei Ausfall des Teilnehmers, der den Pilotton aussendet, das heißt dem Pilotmaster, oder des separaten Pilottongenerators das gesamte Bussystem ausfällt.

Aus Leen, G. et al.: "TTCAN: A new time-triggered controller area network", Microprocessors and Microsystems, IPC Business Press Ltd., London, GB, Bd. 26, Nr. 2, 17. März 2002, Seiten 77-94, XP004339936, ISSN: 0141-9331 ist ein Datennetzwerk bekannt, in dem Daten nach dem TTCAN-Protokoll übertragen werden. In dem Datennetzwerk sind mehrere pilotmasterfähige Teilnehmer vorgesehen, wobei diesen aber eine definierte, fest vorgegebene Prioritätsreihenfolge zugeordnet ist. Immer der höchstpriorisierte Teilnehmer hat die Pilotfunktion inne. Beim Ausfall oder Defekt des höchstpriorisierten Teilnehmers übernehmen in der vorgegebenen Prioritätsreihenfolge die niederpriorisierten Teilnehmer die Pilotfunktion. Außerdem ist in dieser Druckschrift beschrieben, mittels einer Abfrage "bus idle?" zu überprüfen, ob ein Teilnehmer auf den Bus zugreifen darf. Hier geht es also um die eigentliche Datenübertragung im Anschluss an die bereits erfolgte Initialisierung des Datennetzwerks.

Ausgehend von diesem Stand der Technik ist es deshalb die Aufgabe der Erfindung, ein Verfahren zum Bestimmen eines Teilnehmers als Pilotmaster, ein entsprechendes Computerprogramm sowie ein Datennetzwerk·zur Durchführung des Verfahrens und einen Datenträger mit diesem Computerprogramm derart weiterzubilden, dass das Datennetzwerk auch bei Ausfall eines aktuellen Pilotmasters beziehungsweise eines separaten Pilottongenerators noch funktionsfähig bleibt.

Diese Aufgabe durch das in Patentanspruch 1 beanspruchte Verfahren dadurch gelöst, dass mindestens zwei der Teilnehmer pilotmasterfähig ausgebildet sind; zumindest die pilotmasterfähigen Teilnehmer jeweils während eines ihnen individuell zugeordneten Prüfzeitintervalls zufälliger Dauer prüfen, ob ein von anderen Teilnehmern generierter externer Pilotton auf dem Datennetzwerk gesendet wird; und derjenige pilotmasterfähige Teilnehmer tatsächlich Pilotmaster wird und den Pilotton nach Ablauf der zufälligen Dauer seines Prüfzeitintervalls aussendet, der während des Prüfzeitintervalls keinen externen Pilotton auf dem Datennetzwerk detektiert und dessen ihm zugeordnetes Prüfzeitintervall zufällig am frühesten im Vergleich zu den Prüfzeitintervallen der anderen pilotmasterfähigen Teilnehmer endet.

Ein externer Pilotton im Sinne der Erfindung ist jeder von einem anderen Teilnehmer des Datennetzwerkes ausgesendeter Pilotton.

### Vorteile der Erfindung

Das beanspruchte Verfahren bietet den Vorteil, dass nunmehr nicht nur ein vorbestimmter Teilnehmer oder separater Pilottongenerator, sondern mindestens zwei, vorzugsweise jedoch alle Teilnehmer des Datennetzwerkes pilotmasterfähig ausgebildet sind und damit einen ausgefallenen Pilotmaster ersetzen können. Vorteilhafterweise können die Teilnehmer mit Hilfe des beanspruchten Verfahrens eine neue Pilotmasterschaft untereinander festlegen; sie sind dazu nicht auf externe Steuerungen oder Vorgaben angewiesen. Bei Implementierung des beanspruchten Verfahrens ist vorteilhafterweise weder ein separater Pilottongenerator noch eine ursprüngliche Spezifizierung eines Teilnehmers als Pilotmaster erforderlich, wie dies im Stand der Technik noch der Fall war. Vorteilhafterweise sind alle pilotmasterfähigen Teilnehmer des Datennetzwerkes grundsätzlich nicht nur fähig, die Pilotmasterschaft zu übernehmen, sondern auch bei der Zuordnung der Pilotmasterschaft gleichermaßen berechtigt. Über die letztendliche tatsächliche Zuordnung der Pilotmasterschaft wird nach dem Zufallsprinzip, genauer gesagt aufgrund von der zufälligen Dauer von jedem Teilnehmer individuell zugeordneten Prüfzeitintervallen entschieden. Mit dem beanspruchten Verfahren wird die Systemsicherheit wesentlich erhöht, weil mehrere Teilnehmer als potentielle Pilotmaster zur Verfügung stehen. Ein Ausfall des Pilottons und damit auch der Kommunikation über das Datennetzwerk ist deshalb durch das beanspruchte Verfahren weitestgehend ausgeschlossen.

Um sicherzustellen, dass nicht zufällig mehrere pilotmasterfähige Teilnehmer gleichzeitig die Pilotmasterschaft übernehmen wollen, wird gemäß einem ersten Ausführungsbeispiel der Erfindung einem der potentiellen Pilotenmater-Teilnehmer zunächst nur eine temporäre Pilotmasterschaft zugebilligt, während derer das Vorhandensein eines externen Pilottons auf dem Datennetzwerk noch weiter und genauer geprüft wird. Erst nachdem es dem temporären Pilotmaster eine vorbestimmte Anzahl von Malen gelungen ist, die temporäre Pilotmasterschaft an sich zu nehmen, wird ihm gestattet, dauerhaft als Pilotmaster zu fungieren.

Während der temporären Pilotmasterschaft unterbricht der temporäre Pilotmaster immer wieder die Aussendung des Pilottons, um in den auf diese Weise generierten Sendepausen das Vorliegen eines externen Pilottons auf dem Netzwerk zu überprüfen. Vorteilhafterweise erfolgt diese Überprüfung erst nach Ablauf einer Verzögerungszeit nach Beendigung des Aussendens des Pilottons, um zu verhindern, das der aktuelle temporäre Pilotmaster steinen eigenen Pilotton als externen Pilotton detektiert.

Der Übergang eines Teilnehmers von einer temporären Pilotmasterschaft in eine dauerhafte Pilotmasterschaft wird den anderen Teilnehmern in dem Datennetzwerk vorteilhafterweise durch Aussendung eines Erkennungssignals, vorzugsweise in Form eines Ping-Signals angezeigt. Insbesondere nach Erkennen dieses Ping-Signals gehen alle anderen Teilnehmer in einen zunächst temporären Slave-Zustand über und synchronisieren sich auf den von dem dauerhaften Pilotmaster ausgesendeten Pilotton.

Wenn der temporäre Pilotmaster während seiner temporären Pilotmasterschaft in den eben erwähnten Sendepausen einen externen Pilotton in dem Datennetzwerk detektiert, geht er selber in einen temporären Slave-Zustand über. Wie jeder andere Teilnehmer im Slave-Zustand überprüft er dann, ob ein externer Pilotton auf dem Datennetzwerk gesendet wird und insbesondere, ob das Ping-Signal von einem anderen Teilnehmer ausgesendet wird. Grundsätzlich ist dann in dieser Situation weder ein temporärer noch ein dauerhafter Pilotmaster bestimmt und das Verfahren, auch Masterfight genannt, beginnt von vorne.

Weitere vorteilhafte Ausgestaltungen des Verfahrens sind Gegenstand der Unteransprüche.

Die oben genannte Aufgabe der Erfindung wird weiterhin durch ein Computerprogramm zum Durchführen des erfindungsgemäßen Verfahrens, einen Datenträger mit diesem Computerprogramm und ein Datennetzwerk, auf welchem das Verfahren ablaufen kann, gelöst. Die Vorteile dieser Lösungen entsprechen den oben mit Bezug auf das beanspruchte Verfahren genannten Vorteilen. Darüber hinaus sei hervorgehoben, dass das Verfahren nicht nur auf Datennetzwerken, welche als Bussystem, zum Beispiel als CAN-Bussystem ausgebildet sind, sondern auch auf Datennetzwerken in Form von Energieversorgungsleitungen, über die auch Daten übertragen werden (Power Communications), Anwendung finden kann.

### Zeichnungen

Der Beschreibung sind insgesamt zwei Figuren beigefügt, wobei
Figur 1 ein Flussdiagramm zur Veranschaulichung des erfindungsgemäßen Verfahrens; und
Figur 2 ein Zustandsdiagramm zur Veranschaulichung der möglichen, von einem Teilnehmer des Datennetzwerks einzunehmenden Zustände zeigt.

### Beschreibung der Ausführungsbeispiele

Die Erfindung wird nachfolgend in Form von Ausführungsbeispielen detailliert unter Bezugnahme auf die beiden Figuren beschrieben.

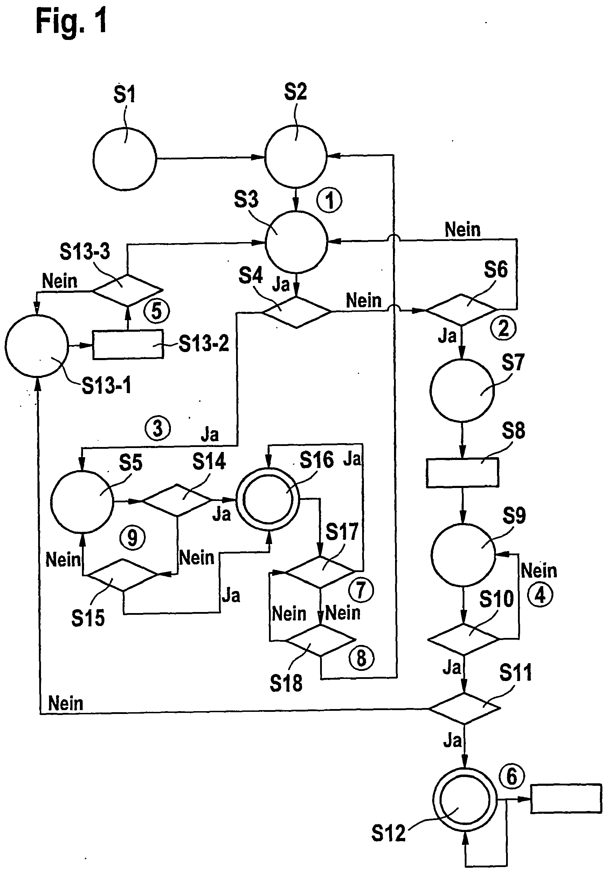

Figur 1 veranschaulicht ein Verfahren zum Bestimmen eines Teilnehmers, insbesondere eines Transceivers aus einer Vielzahl von Teilnehmern eines Datennetzwerks als Pilotmaster zum Aussenden eines Pilottons, auf welchen sich die anderen Netzteilnehmer dann synchronisieren können. Das in Figur 1 gezeigte Verfahren bezieht sich auf einen einzelnen Teilnehmer des Datennetzwerks. Es läuft gleichermaßen bei allen Teilnehmern des Datennetzwerkes ab.

Ausgangspunkt des Verfahrens ist ein Reset-Zustand des betrachteten Teilnehmers. Nach diesem Reset gemäß Verfahrensschritt gemäß S1 geht jeder der Teilnehmer in einen Initialisierungsschritt S2 und nachfolgend gemäß Verfahrensschritt S3 in einen Standby-Zustand über.

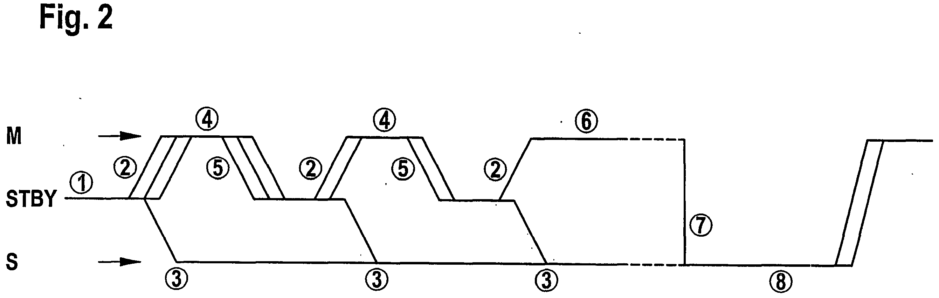

Dieser Standby-Zustand ist auch in Figur 2 als Ausgangszustand für einen Teilnehmer veranschaulicht. Figur 2 veranschaulicht ganz allgemein die möglichen Zustände, die ein einzelner Teilnehmer während der Durchführung des erfindungsgemäßen Verfahrens, das heißt während der Durchführung eines Masterfights einnehmen kann. Neben dem Standby-Zustand sind dies ein Slave-Zustand oder ein Pilotmaster-Zustand, in dem der Teilnehmer einen Pilotton in das Datennetzwerk aussendet, damit sich die anderen Teilnehmer des Datennetzwerkes auf diesen Pilotton synchronisieren können. Die einzelnen Wechsel eines Teilnehmers zwischen den genannten möglichen Zuständen sind in Figur 2 durch Bezugszeichen in Form von Zahlen in Kreisen angedeutet. Dieselben Bezugszeichen finden sich auch in Figur 1 wieder und ermöglichen damit eine Zuordnung der Zustandswechsel zu dem in Figur 1 gezeigten Verfahrensablauf.

Nach Verfahrensschritt S3 prüft der Teilnehmer in Verfahrensschritt S4, ob ein von einem anderen Teilnehmer generierter externer Pilotton auf dem Datennetzwerk gesendet wird. Diese Prüfung erfolgt während eines dem Teilnehmer individuell zugeordneten Prüfzeitintervalls zufälliger Dauer. Wird während des Prüfzeitintervalls ein externer Pilotton detektiert, so geht der Teilnehmer in einen temporären Slave-Zustand gemäß Verfahrensschritt S5 über. Der Ablauf der Dauer des Prüfzeitintervalls wird in Verfahrensschritt S6 überprüft. Wird bis zum Ablauf der zufälligen Dauer des Prüfzeitintervalls kein externer Pilotton auf dem Datennetzwerk detektiert, so geht der Teilnehmer in einen temporären Master-Zustand über, welcher durch die Verfahrensschritte beziehungsweise Zustände S7 bis S11 repräsentiert ist, über. Der Zustand S7 wird als Master-Start bezeichnet. In diesem Zustand wird ein Zähler, dessen Bedeutung weiter unten erläutert wird, inkrementiert und es wird gemäß Verfahrensschritt S8 ein Pilotton in das Datennetz ausgesendet. Das Aussenden erfolgt während eines Sendezeitintervalls zufälliger Dauer und wird in einem Zustand Master-Überwachung, symbolisiert durch S9, überwacht. Das Ende des temporären Sendezeitintervalls ist dann erreicht, wenn in Verfahrensschritt S10 festgestellt wird, dass ein die zufällige Dauer des Sendezeitintervalls repräsentierender Timer abgelaufen ist. Die soeben beschriebene erste temporäre Masterschaft eines Teilnehmers ist auch in Figur 2 veranschaulicht. Dort ist zu erkennen, dass der Teilnehmer aus dem Standby-Zustand nach Ablauf eines ersten Prüfzeitintervalls zufälliger Dauer, symbolisiert durch eine 2 in einem Kreis, in den Zustand der temporären Masterschaft, symbolisiert durch eine 4 in einem Kreis, übergeht.

Bevor ein Teilnehmer dauerhaft eine Pilotmasterschaft gemäß S12 in Figur 1 annimmt, muss er die beschriebene temporäre Masterschaft für eine vorbestimmte Anzahl X von Malen einnehmen. Es wird deshalb in Verfahrensschritt S11 anhand des aktuellen Standes des in Zustand S7 inkrementierten Zählers geprüft, ob der Teilnehmer bereits X mal temporärer Master war oder nicht. Verläuft diese Prüfung negativ, so wechselt der Teilnehmer in einen Wartezustand S13-1. Spätestens dann schaltet er den temporär ausgesendeten Pilotton ab S13-2 und wartet solange, bis eine fest vorgegebene Verzögerungszeit abgelaufen ist S13-3.

Die Wartezeit S13 zwischen dem Beenden des temporären Aussendens des Pilottons und dem erneuten Einstieg in das Prüfzeitintervall gemäß Verfahrensschritt S4 ist deshalb erforderlich, um zu vermeiden, dass der Teilnehmer den von ihm'selber während seiner temporären Masterschaft ausgesendeten Pilotton während der erneuten Durchführung von Verfahrensschritt S4 detektiert.

Nach Ablauf der Verzögerungszeit geht der Teilnehmer kurzzeitig wieder in den Standby-Zustand gemäß Verfahrensschritt S3 über und prüft dann nachfolgend während des Prüfzeitintervalls zufälliger Dauer gemäß Verfahrensschritt S4, ob ein externer Pilotton in dem Datennetzwerk gesendet wird.

Die Schritte S4 - S11 und S13 werden dann jeweils erneut so oft durchlaufen, bis schließlich die vorbestimmte Anzahl X Malen erreicht ist. Das Erreichen der Anzahl X von Malen wird schließlich in Verfahrensschritt S11 detektiert und der beschriebene Zyklus von temporärer Masterschaft und Wartezustand mit nachfolgender Prüfungsphase wird dann durchbrochen und der Teilnehmer geht in die dauerhafte Pilotmasterschaft gemäß Verfahrensschritt S12 über. Während der dauerhaften Pilotmasterschaft sendet der Teilnehmer den Pilotton dauerhaft aus und indiziert die Übernahme der dauerhaften Pilotmasterschaft durch Aussenden eines sogenannt Ping-Signals auf das Datennetzwerk. Die dauerhafte Pilotmasterschaft wird erst durch ein Abschalten des Netzwerks oder durch einen Reset oder Ausfall des dauerhaften Pilotmasters beendet.

Die dauerhafte Pilotmasterschaft nimmt ein Teilnehmer jedoch nur dann ein, wenn er während keiner der wiederholten Prüfzeitintervalle gemäß Verfahrensschritt S4 einen externen Pilotton auf dem Datennetzwerk detektiert. Sollte dies der Fall sein, wechselt der bis dahin temporäre Pilotmaster in einen temporären Slave-Zustand, symbolisiert durch S5. In genau denselben temporären Slave-Zustand wechseln auch alle anderen Teilnehmer, nachdem sich ein Teilnehmer zum dauerhaften Pilotmaster S12 deklariert hat. In dem Zustand S5 prüfen die temporären Slaves während eines Prüfzeitintervalls mit vorgeschriebener Dauer, ob ein Ping-Signal in dem Datennetzwerk gesendet wird. Wenn entweder ein Ping-Signal in Verfahrensschritt S14 detektiert wird oder in Verfahrensschritt S15 festgestellt wird, dass die vorbestimmte Dauer des Prüfzeitintervalls abgelaufen ist, wechselt der Teilnehmer in einen dauerhaften Slave-Zustand S16. In diesem Zustand 16 prüft der Teilnehmer kontinuierlich, ob ein externer Pilotton in dem Datennetzwerk gesendet wird. Solange dies der Fall ist, bleibt der Teilnehmer in dem dauerhaften Slave-Zustand S16. Wird jedoch in Verfahrensschritt S17 festgestellt, dass ein externer Pilotton nicht mehr gesendet wird, so setzt er den beschriebenen Prüfvorgang noch während eines weiteren Prüfzeitintervalls fort. Die Dauer dieses weiteren Prüfzeitintervalls ist in der Regel zufällig, sie kann jedoch auch fest vorgegeben sein. Wichtig ist nur, dass diese Dauer wesentlich größer ist als die zufälligen Dauern, die in den Verfahrensschritten S6 und S10 überprüft werden. Vorteilhafterweise ist die in Verfahrensschritt S18 überprüfte Dauer 10 mal größer als die in den Verfahrensschritten S6 und S10 überprüften Zeitdauern. Wenn irgendwann während des weiteren Prüfzeitintervalls erneut ein externer Pilotton im Datennetzwerk detektiert wird, geht der Teilnehmer wieder in den beschriebenen dauerhaften Slave-Zustand S16 über. Wird jedoch auch nach Ablauf dieses weiteren Prüfzeitintervalls kein externer Pilotton im Datennetzwerk detektiert, so geht der Teilnehmer wieder über den Initialisierungszustand S2 und den Standby-Zustand S3 in eine Prüfung über das Vorliegen eines externen Pilottons gemäß Verfahrensschritt S4 über. Von dort aus wiederholen sich die Verfahrensschritte wie oben beschrieben.

Das beschriebene Verfahren wird vorzugsweise in Form eines Computerprogramms realisiert. Dieses Computerprogramm kann gegebenenfalls zusammen mit weiteren Computerprogrammen auf einem computerlesbaren Datenträger abgespeichert werden. Bei dem Datenträger kann es sich um eine Diskette, eine Compact Disk, einen sogenannten Flash-Memory oder dergleichen handeln. In der Praxis erfolgt die Speicherung des Computerprogramms auf einem Electrically Erasable Programmable Read-Only Memory EEPROM und seine Implementierung auf einem Field Programmable Gate Array FPGA oder einem Complex Programmable Logic Device CPLD. Das auf dem Datenträger abgespeicherte Computerprogramm kann dann als Produkt an einen Kunden übertragen und verkauft werden.

Das Computerprogramm muss jedoch nicht zwingend auf einem Datenträger an den Kunden übertragen werden. Vielmehr kann es auch gegebenenfalls mit weiteren Computerprogrammen ohne die Zuhilfenahme eines Datenträgers über ein elektronisches Kommunikationsnetzwerk, insbesondere das Internet, als Produkt an einen Kunden übertragen und verkauft werden.

Das beschriebene Verfahren kann grundsätzlich auf verschiedensten Datennetzwerken wie zum Beispiel Bussystemen, insbesondere CAN-Bussystemen, Anwendung finden. Besonders vorteilhaft ist seine Anwendung jedoch auf einem Energieversorgungsnetz, auf dem auch Daten übertragen werden (Power Line Communications). Voraussetzung für die Anwendung des Verfahrens ist in jedem Fall, dass mindestens zwei, vorzugsweise jedoch alle Teilnehmer bezüglich ihrer Hardware so ausgebildet sind, dass sie zur Übernahme einer Pilotmasterschaft geeignet sind.

Das erfindungsgemäße Verfahren ist typischerweise bereits nach wenigen Millisekunden durchlaufen; dies bedeutet, dass spätestens nach dieser Zeit einer der Teilnehmer als Pilotmaster bestimmt ist und dass dann eine Sychronisation der Teilnehmer des Datennetzwerkes untereinander und eine Kommunikation zwischen den Teilnehmern möglich ist.

## Patentansprüche

1. Verfahren zum Bestimmen eines Teilnehmers, insbesondere eines Transceivers, aus einer Vielzahl von Teilnehmern eines Datennetzwerkes als Pilotmaster zum Aussenden eines Pilottons auf welchen sich die anderen Teilnehmer des Datennetzwerkes synchronisieren können, wobei mindestens zwei der Teilnehmer pilotmasterfähig ausgebildet sind,
**dadurch gekennzeichnet, dass**
zumindest die pilotmasterfähigen Teilnehmer jeweils während eines ihnen individuell zugeordneten Prüfzeitintervalls zufälliger Dauer prüfen, ob ein von einem anderen Teilnehmer generierter externer Pilotton auf dem Datennetzwerk gesendet wird (S4, S6); und
derjenige pilotmasterfähige Teilnehmer tatsächlich Pilotmaster wird (S7) und den Pilotton nach Ablauf der zufälligen Dauer seines Prüfzeitintervalls aussendet (S8), der während des Prüfzeitintervalls keinen externen Pilotton auf dem Datennetzwerk detektiert, und dessen ihm zugeordnetes Prüfzeitintervall zufällig am frühesten im Vergleich zu den Prüfzeitintervallen der anderen pilotmasterfähigen Teilnehmer endet.

2. Verfahren nach Anspruch 1, **dadurch gekennzeichnet, dass**
a) sich der Pilotmaster die Pilotmasterschaft nur temporär für ein Sendezeitintervall zufälliger Dauer selber zuteilt (S7) und dass er nach Ablauf dieses Sendezeitintervalls das Aussenden des Pilottons wieder beendet (S9, S10);
b) der letzte temporäre Pilotmaster nach Ablauf des Sendezeitintervalls erneut während eines ihm zugeordneten weiteren Prüfzeitintervalls zufälliger Dauer prüft, ob ein von einem anderen Teilnehmer generierter Pilotton auf dem Datennetzwerk gesendet wird (S4);
c) der letzte temporäre Pilotmaster wieder erneut Pilotmaster wird und den Pilotton aussendet, wenn er während des weiteren Prüfzeitintervalls keinen externen Pilotton auf dem Datennetzwerk detektiert (S7 - S10) und kein anderer pilotmasterfähiger Teilnehmer die Pilotmasterschaft früher für sich beansprucht; und
d) Wiederholen der Schritte a) bis c) für eine vorbestimmte Anzahl X-1 von Malen.

3. Verfahren nach Anspruch 2, **dadurch gekennzeichnet, dass** der Schritt b) erst nach Ablauf einer Verzögerungszeit (T) nach Beendigung des Schrittes a) ausgeführt wird (S13).

4. Verfahren nach einem der Ansprüche 2 oder 3, **dadurch gekennzeichnet, dass** der letzte Pilotmaster nach der X-1'ten Wiederholung dauerhaft Pilotmaster bleibt und den Pilotton dauerhaft aussendet (S12).

5. Verfahren nach Anspruch 4, **dadurch gekennzeichnet, dass** der dauerhaft implementierte Pilotmaster ein Erkennungssignal in Form eines Ping-Signals aussendet.

6. Verfahren nach Anspruch 4 oder 5, **dadurch gekennzeichnet, dass** die dauerhafte Pilotmasterschaft erst durch ein Abschalten des Datennetzwerkes oder einen Reset oder einen Ausfall des dauerhaften Pilotmasters beendet wird.

7. Verfahren nach einem der Ansprüche 4 bis 6, **dadurch gekennzeichnet, dass** sich nach der dauerhaften Implementierung des Pilotmasters und insbesondere nach dem Empfang des Ping-Signals alle anderen Teilnehmer des Datennetzwerkes in einen temporären Slave-Zustand (S5) versetzten und sich auf den von dem Pilotmaster ausgesendeten Pilotton synchronisieren.

8. Verfahren nach einem der Ansprüche 1 bis 3, **dadurch gekennzeichnet, dass** der Teilnehmer beziehungsweise der letzte aktuelle Pilotmaster in einen temporären Slave-Zustand (S5) übergeht, wenn er während eines Prüfzeitintervalls einen ausgesandten Pilotton auf dem Datennetz detektiert (S4).

9. Verfahren nach Anspruch 7 oder 8, **dadurch gekennzeichnet, dass** ein Teilnehmer im temporären Slave-Zustand (S5) während der vorbestimmten Dauer eines Prüfzzeitintervalls prüft (S14, S15), ob ein externer Pilotton auf dem Datennetzwerk gesendet wird und insbesondere ob das Ping-Signal von dem dauerhaft implementierten Pilotmaster ausgesendet wird.

10. Verfahren nach Anspruch 9, **dadurch gekennzeichnet, dass** wenn entweder ein Ping-Signal erkannt oder die vorbestimmte Dauer des Prüfzeitintervalls abgelaufen ist, der Teilnehmer im temporären Slave-Zustand in einen dauerhaften Slave-Zustand (S16) wechselt, in welchem der Teilnehmer einer Steuerung des Datennetzwerkes mitteilt, dass er zur Durchführung der Teilnahme an einer Kommunikation über das Datennetzwerk bereit ist; und
der Teilnehmer im dauerhaften Slave-Zustand sich auf den von dem Pilotmaster ausgesendeten Pilotton synchronisiert.

11. Verfahren nach Anspruch 10, **dadurch gekennzeichnet, dass** ein Teilnehmer solange im dauerhaften Slave-Zustand bleibt, wie er einen externen Pilotton im Datennetz detektiert; sobald kein Pilotton mehr detektiert wird, der Teilnehmer während eines Prüfzeitintervalls mit vorbestimmter oder zufälliger Dauer (S18) erneut prüft, ob ein externer Pilotton gesendet wird;
wenn während des Prüfzeitintervalls ein externer Pilotton festgestellt wird, der Teilnehmer im dauerhaften Slave-Zustand (S16) verbleibt; und wenn während des Prüfzeitintervalls kein externer Pilotton festgestellt wird, der Teilnehmer nach Ablauf der Dauer des Prüfzeitintervalls über einen Initialisierungszustand (S2) und einen Standby-Zustand (S3) zu einem Verfahrensschritt S4 wechselt, um von dort aus das Verfahren erneut zu durchlaufen.

12. Computerprogramm mit Programmcode **dadurch gekennzeichnet, dass** der Programmcode ausgebildet ist zur Durchführung des Verfahrens nach einem der Ansprüche 1-11.

13. Datenträger mit einem Computerprogramm nach Anspruch 12.

14. Datennetzwerks mit einer Vielzahl von Teilnehmern, auf dem einer der Teilnehmer konfiguriert ist, als Pilotmaster zu fungieren und einen Pilotton auszusenden, und die anderen Teilnehmer konfiguriert sind, sich auf diesen Pilotton zu synchronisieren, wobei mindestens zwei der Teilnehmer pilotmasterfähig sind, **dadurch gekennzeichnet, dass** die pilotmasterfähigen Teilnehmer zur Durchführung des Verfahrens nach einem der Ansprüche 1 - 11 ausgebildet ist, um sich erforderlichenfalls selber zum Pilotmaster machen zu können.

15. Datennetzwerk nach Anspruch 14, **dadurch gekennzeichnet** das es sich bei dem Datennetzwerk um Energieversorgungsleitungen, insbesondere in einem Kfz, handelt, über die auch Daten übertragen werden.

## Claims

1. Method for determining a subscriber, particularly a transceiver, from a multiplicity of subscribers in a data network as a pilot master for transmitting a pilot tone to which the other subscribers in the data network can synchronize themselves, wherein at least two of the subscribers are designed with pilot master capability, **characterized in that**
at least the subscribers with pilot master capability each check, during a checking time period of random duration that is individually associated with them, whether an external pilot tone generated by another subscriber is sent on the data network (S4, S6); and that subscriber with pilot master capability that, during the checking time period, does not detect an external pilot tone on the data network, and whose associated checking time period happens to end earliest in comparison with the checking time periods of the other subscribers with pilot master capability, actually becomes pilot master (S7) and transmits (S8) the pilot tone after the random duration of its checking time period has elapsed.

2. Method according to Claim 1, characterized in'that
a) the pilot master allocates (S7) the pilot master status to itself only temporarily for a transmission time period of random duration and in that it terminates (S9, S10) transmission of the pilot tone again after this transmission time period has elapsed;
b) the last temporary pilot master, after the transmission time period has elapsed, again checks during a further checking time period of random duration that is associated with said pilot master, whether a pilot tone generated by another subscriber is sent on the data network (S4);
c) the last temporary pilot master becomes pilot master once again and transmits the pilot tone if it does not detect (S7 - S10) an external pilot tone on the data network during the further checking time period and no other subscriber with pilot master capability claims the pilot master status for itself at an earlier time; and
d) steps a) to c) are repeated for a predetermined number X-1 of times.

3. Method according to Claim 2, **characterized in that** step b) is carried out (S13) only after a delay time (T) following termination of step a) has elapsed.

4. Method according to either of Claims 2 and 3, **characterized in that** the last pilot master remains pilot master on an ongoing basis following the X-1th repetition and transmits (S12) the pilot tone on an ongoing basis.

5. Method according to Claim 4, **characterized in that** the pilot master implemented on an ongoing basis transmits an identification signal in the form of a ping signal.

6. Method according to Claim 4 or 5, **characterized in that** the ongoing pilot master status is terminated only by shutdown of the data network or reset or failure of the ongoing pilot master.

7. Method according to one of Claims 4 to 6, **characterized in that** following the ongoing implementation of the pilot master and particularly following reception of the ping signal, all other subscribers in the data network put themselves into a temporary slave state (S5) and synchronize themselves to the pilot tone transmitted by the pilot master.

8. Method according to one of Claims 1 to 3, **characterized in that** the subscriber or the last current pilot master changes to a temporary slave state (S5) if it detects (S4) a transmitted pilot tone on the data network during a checking time period.

9. Method according to Claim 7 or 8, **characterized in that** a subscriber in the temporary slave state (S5) checks (S14, S15), over the predetermined duration of a checking time period, whether an external pilot tone is sent on the data network and particularly whether the ping signal is transmitted by the pilot master implemented on an ongoing basis.

10. Method according to Claim 9, **characterized in that** if either a ping signal is identified or the predetermined duration of the checking time period has elapsed, the subscriber in the temporary slave state changes to an ongoing slave state (S16) in which the subscriber notifies a controller in the data network that it is ready to carry out participation in a communication via the data network; and
the subscriber in the ongoing slave state synchronizes itself to the pilot tone transmitted by the pilot master.

11. Method according to Claim 10, **characterized in that**
a subscriber remains in the ongoing slave state for as long as it detects an external pilot tone in the data network;
as soon as a pilot tone is no longer detected, the subscriber again checks, during a checking time period of predetermined or random duration (S18), whether an external pilot tone is sent;
if an external pilot tone is observed during the checking time period, the subscriber remains in the ongoing slave state (S16); and if no external pilot tone is observed during the checking time period, the subscriber changes to a method step (S4) via an initialization state (S2) and a standby state (S3) after the duration of the checking time period has elapsed, in order to execute the method again from said method step.

12. Computer program having program code, **characterized in that** the program code is designed to carry out the method according to one of Claims 1 - 11.

13. Data storage medium having a computer program according to Claim 12.

14. Data network having a multiplicity of subscribers, on which data network one of the subscribers is configured to act as pilot master and to transmit a pilot tone, and the other subscribers are configured to synchronize themselves to this pilot tone, wherein at least two of the subscribers have pilot master capability, **characterized in that** the subscribers with pilot master capability are designed to carry out the method according to one of Claims 1 to 11 in order to be able to make themselves pilot master if required.

15. Data network according to Claim 14, **characterized in that** the data network is power supply lines, particularly in a motor vehicle, that are also used to transmit data.

## Revendications

1. Procédé de définition d'un périphérique, notamment d'un émetteur-récepteur, parmi une pluralité de périphériques d'un réseau de données en tant que maître pilote pour l'émission d'une tonalité pilote sur laquelle peuvent se synchroniser les autres périphériques du réseau de données, au moins deux des périphériques étant configurés avec l'aptitude à être maître pilote,
**caractérisé en ce que**
au moins les périphériques dotés de l'aptitude à être maître pilote contrôlent, respectivement pendant un intervalle de temps de contrôle de durée aléatoire qui leur est attribué individuellement, si une tonalité pilote externe générée par un autre périphérique est émise sur le réseau de données (S4, S6) ; et
le périphérique doté de l'aptitude à être maître pilote qui, pendant l'intervalle de temps de contrôle, ne détecte aucune tonalité pilote externe sur le réseau de données et dont l'intervalle de temps de contrôle qui lui est attribué se termine le plus tôt en comparaison des intervalles de temps de contrôle des autres périphériques dotés de l'aptitude à être maître pilote, devient le maître pilote (S7) et émet la tonalité pilote après écoulement de la durée aléatoire de son intervalle de temps de contrôle (S8).

2. Procédé selon la revendication 1, **caractérisé en ce que**
a) le maître pilote ne s'accorde la qualité de maître pilote que temporairement pendant un intervalle de temps d'émission de durée aléatoire (S7) et après écoulement de cet intervalle de temps d'émission, met de nouveau fin à l'émission de la tonalité pilote (S9, S10) ;
b) le dernier maître pilote temporaire, après écoulement de l'intervalle de temps d'émission, contrôle de nouveau pendant un intervalle de temps d'émission supplémentaire de durée aléatoire qui lui est attribué, si une tonalité pilote générée par un autre périphérique est émise sur le réseau (S4) ;
c) le dernier maître pilote temporaire redevient maître pilote et émet la tonalité pilote si, pendant l'intervalle de temps d'émission supplémentaire, il ne détecte aucune autre tonalité pilote sur le réseau de données (S7 - S10) et qu'aucun autre périphérique doté de l'aptitude à être maître pilote ne revendique la position de maître pilote plus tôt pour lui-même ; et
d) les étapes a) à c) sont répétées un nombre X-1 de fois.

3. Procédé selon la revendication 2, **caractérisé en ce que** l'étape b) n'est exécutée qu'après écoulement d'une temporisation (T) après avoir terminé l'étape a) (S13).

4. Procédé selon l'une des revendications 2 ou 3, **caractérisé en ce qu'**après la X-1^{ème} répétition, le dernier maître pilote reste en permanence le maître pilote et émet la tonalité pilote en continu (S12).

5. Procédé selon la revendication 4, **caractérisé en ce que** le maître pilote mis en oeuvre de manière permanente émet un signal de reconnaissance sous la forme d'un signal Ping.

6. Procédé selon la revendication 4 ou 5, **caractérisé en ce que** le maître pilote permanent ne prend fin que par une mise hors tension du réseau de données ou encore par une réinitialisation ou une défaillance du maître pilote permanent.

7. Procédé selon l'une des revendications 4 à 6, **caractérisé en ce qu'**après la mise en oeuvre de manière permanente du maître pilote, et notamment après la réception du signal Ping, tous les autres périphériques du réseau de données adoptent un état d'esclave temporaire (S5) et se synchronisent sur la tonalité pilote émise par le maître pilote.

8. Procédé selon l'une des revendications 1 à 3, **caractérisé en ce que** le périphérique ou le dernier maître pilote actuel passe dans un état d'esclave temporaire (S5) si, pendant un intervalle de temps de contrôle, il détecte une tonalité pilote émise sur le réseau de données (S4).

9. Procédé selon la revendication 7 ou 8, **caractérisé en ce qu'**un périphérique à l'état d'esclave temporaire (S5) vérifie pendant la durée prédéfinie d'un intervalle de temps de contrôle (S14, S15) si une tonalité pilote externe est émise sur le réseau de données et notamment si le signal Ping est émis par le maître pilote mis en oeuvre de manière permanente.

10. Procédé selon la revendication 9, **caractérisé en ce que** lorsque soit un signal Ping est reconnu, soit la durée prédéfinie de l'intervalle de temps de contrôle est écoulée, le périphérique dans l'état d'esclave temporaire passe dans un état d'esclave permanent (S16) dans lequel le périphérique communique à une commande du réseau de données qu'il est prêt à participer à une communication par le biais du réseau de données ; et
le périphérique dans l'état d'esclave permanent se synchronise sur la tonalité pilote envoyée par le maître pilote.

11. Procédé selon la revendication 10, **caractérisé en ce que**
un périphérique reste dans l'état d'esclave permanent aussi longtemps qu'il détecte une tonalité pilote externe dans le réseau de données ;
dès qu'aucune tonalité pilote n'est plus détectée, le périphérique contrôle de nouveau, pendant un intervalle de temps de contrôle de durée prédéfinie ou aléatoire (S18), si une tonalité pilote externe est émise ;
si une tonalité pilote externe est constatée pendant l'intervalle de temps de contrôle, le périphérique reste dans l'état d'esclave permanent (S16) ; et
si aucune tonalité pilote externe n'est constatée pendant l'intervalle de temps de contrôle, le périphérique, après écoulement de la durée de l'intervalle de temps de contrôle, change dans une étape S4 du procédé, en passant par un état d'initialisation (S2) et un état de veille (S3), afin de recommencer à nouveau le procédé à partir de celle-ci.

12. Programme informatique comprenant un code de programme, **caractérisé en ce que** le code de programme est configuré pour mettre en oeuvre le procédé selon l'une des revendications 1 à 11.

13. Support de données comprenant un programme informatique selon la revendication 12.

14. Réseau de données comprenant une pluralité de périphériques, sur lequel l'un des périphériques est configuré pour faire office de maître pilote et émettre une tonalité pilote, et les autres périphériques sont configurés pour se synchroniser sur cette tonalité pilote, au moins deux des périphériques étant configurés avec l'aptitude à être maître pilote, **caractérisé en ce que** les périphériques dotés de l'aptitude à être maître pilote sont configurés pour mettre en oeuvre le procédé selon l'une des revendications 1 à 11 afin de pouvoir, si nécessaire, se paramétrer eux-mêmes en tant que maître pilote.

15. Réseau de données selon la revendication 14, **caractérisé en ce que** le réseau de données est constitué de lignes de distribution d'énergie, notamment dans un véhicule automobile, par le biais desquelles des données sont également transmises.
